# EUROPÄISCHE PATENTSCHRIFT

(11) **EP 4 126 568 B1**
(45) Veröffentlichungstag und Bekanntmachung des Hinweises auf die Patenterteilung: **26.03.2025**
(21) Anmeldenummer: 21715184.4
(22) Anmeldetag: 22.03.2021
(51) Int. Cl.: B60C 23/04

(54) **VERFAHREN ZUM ÜBERWACHEN DES REIFENDRUCKS EINES FAHRZEUGRADES SOWIE REIFENDRUCKÜBERWACHUNGSEINHEIT**
METHOD FOR MONITORING THE TYRE PRESSURE OF A VEHICLE WHEEL, AND TYRE PRESSURE MONITORING UNIT
PROCÉDÉ DE SURVEILLANCE DE PRESSION DE GONFLAGE D'UNE ROUE DE VÉHICULE, ET UNITÉ DE SURVEILLANCE DE PRESSION DE GONFLAGE

(30) Priorität: 30.03.2020 DE 102020108782
(43) Veröffentlichungstag der Anmeldung: 08.02.2023
(73) Patentinhaber: Huf Baolong Electronics Bretten GmbH, 75015 Bretten (DE)
(72) Erfinder: WAGNER, Markus, 71638 Ludwigsburg (DE)
(74) Vertreter: Twelmeier Mommer & Partner
(86) Internationale Anmeldenummer: PCT/EP2021/057248
(87) Internationale Veröffentlichungsnummer: WO 2021/197891

(56) Entgegenhaltungen:
- US-A1- 2002 044 050
- US-A1- 2014 195 107
- US-A1- 2018 023 977

## Beschreibung

Die Erfindung betrifft ein Verfahren zum Überwachen des Reifendrucks eines Fahrzeugrades sowie eine entsprechende Reifendrucküberwachungseinheit. Ein Verfahren mit den im Oberbegriff des Anspruchs 1 angegebenen Merkmalen ist aus US 2018/023977 A1 sowie aus US2014/195107 A1 bekannt.

Reifendrucküberwachungseinheiten, die einen Drucksensor und in der Regel auch einen Temperatursensor enthalten, werden an Fahrzeugrädern montiert und können dann drahtlos Informationen über den Reifendruck zur Verfügung stellen, d.h. an eine zentrale Auswerteeinheit des Fahrzeugs senden. Eine derartige Einheit ist aus der US2002044050 A1 bekannt.

Ein ständiges Problem bei der Entwicklung von Reifendrucküberwachungseinheiten ist ein Zielkonflikt zwischen einem möglichst stromsparenden Betrieb einerseits und einer möglichst aktuellen und zuverlässigen Bereitstellung von Druckdaten. Je häufiger Informationen über den Reifendruck gesendet werden, desto größer ist grundsätzlich der Energieverbrauch einer Reifendrucküberwachungseinheit.

Um unnötige Sendetätigkeit zu vermeiden und so den Stromverbrauch zu reduzieren, sind etwa aus der WO 2009/132623 A1 Reifendrucküberwachungseinheiten bekannt, deren Sendetätigkeit bei parkendem Fahrzeug eingestellt ist. Wenn von einem Beschleunigungssensor der Reifendrucküberwachungseinheiten eine Rollbewegung detektiert wird, geht die Reifendrucküberwachungseinheit in einen Fahrtmodus über, in dem dann der Reifendruck gemessen und Druckinformationen gesendet werden.

Aktuelle Druckinformationen stehen bei dem aus der WO 2009/132623 A1 bekannten System aber erst einige Zeit nach Fahrtbeginn zur Verfügung. Damit ein für die Fahrsicherheit kritischer Reifendruck schon zu einem früheren Zeitpunkt zur Verfügung steht, wird bei einem in der DE 10 2008 004 953 A1 beschriebenen Verfahren der Reifendruck auch bei parkendem Fahrzeug gemessen, etwa in Zeitintervallen von einer Stunde. Sobald dabei ein kritischer Druckabfall festgestellt wird, geht die Reifendrucküberwachungseinheit in einen Warnmodus über, in dem alle 10 bis 20 Sekunden eine Druckinformation gesendet wird. Bei Fahrtbeginn kann ein Fahrer somit frühzeitig auf einen zu geringen Reifendruck hingewiesen werden.

Aufgabe der vorliegenden Erfindung ist es, einen Weg aufzuzeigen, wie der Zielkonflikt zwischen einem möglichst stromsparenden Betrieb einerseits und einer möglichst aktuellen und zuverlässigen Bereitstellung von Druckdaten andererseits noch besser gelöst werden kann.

Diese Aufgabe wird durch ein Verfahren mit den im Anspruch 1 angegebenen Merkmalen sowie eine Reifendrucküberwachungseinheit gemäß Anspruch 5 gelöst. Vorteilhafte Weiterbildungen der Erfindung sind Gegenstand von Unteransprüchen.

Bei einem erfindungsgemäßen Verfahren wird die Sendetätigkeit bei parkendem Fahrzeug eingestellt und erst wieder aufgenommen, wenn durch einen Beschleunigungssensor der Reifendrucküberwachungseinheit ein Fahrtbeginn detektiert wird. Damit einem Fahrer bei Fahrtbeginn trotzdem möglichst frühzeitig ein problematischer Druckverlust bei minimalem Energieverbrauch angezeigt werden kann, wird erfindungsgemäß bei parkendem Fahrzeug in vorgegebenen Zeitabständen ein aktuelles Messsignal des Beschleunigungssensors mit einem früheren Messsignal des Beschleunigungssensors verglichen. Sobald sich die Drehwinkelstellung eines Rades ändert, ändert sich auch die Orientierung eines Beschleunigungssensors im Schwerkraftfeld der Erde. Durch Vergleich eines aktuellen Messsignals des Beschleunigungssensors mit einem früheren Messsignal lassen sich deshalb sehr frühzeitig eine Raddrehung und damit ein Fahrtbeginn erkennen. Erfindungsgemäß besteht deshalb eine notwendige Bedingung für das Aussenden von Druckdaten darin, dass sich das aktuelle Messsignal des Beschleunigungssensors von einem früheren Messsignal des Beschleunigungssensors um mehr als einen vorgegebenen Schwellenwert unterscheidet.

Bei einem solchen Verfahren könnte diese notwendige Bedingung zugleich auch eine hinreichende Bedingung sein, d.h. Druckdaten werden gesendet, sobald sich das aktuelle Messsignal des Beschleunigungssensors von einem zuvor gemessenen Messsignal des Beschleunigungssensors um mehr als einen vorgegebenen Schwellenwert unterscheidet. Allerdings sind Signale von Beschleunigungssensoren in Reifendrucküberwachungseinheiten erheblichen Störeinflüssen ausgesetzt und unterliegen erheblichem Rauschen. Eine Änderung der Messsignale von Beschleunigungssensoren tritt deshalb häufig auch auf, obwohl sich die Drehwinkelstellung des Rades gar nicht geändert hat. Wenn die notwendige Bedingung zugleich auch eine hinreichende Bedingung ist, werden also relativ oft Druckdaten bei parkendem Fahrzeug gesendet, weil fehlerhaft ein Fahrtbeginn angenommen wurde.

Erfindungsgemäß ist deshalb vorgesehen, die notwendige Bedingung mit einer weiteren Bedingung zu verknüpfen, nämlich einem Druckabfall. Ein frühzeitiges Aussenden von Druckdaten ist nämlich nur dann wichtig, wenn der Fahrer gewarnt werden muss, also ein Abfall des Reifendrucks unter einen vorgegebenen Schwellenwert detektiert wurde. Wird eine Sendetätigkeit erst aufgenommen, wenn zusätzlich zu der notwendigen Bedingung auch ein Abfall
des Reifendrucks unter einen vorgegebenen Schwellenwert detektiert wurde, lassen sich unnötige Sendungen vermeiden. Vorteilhaft kann so mit geringem Energieaufwand ein Fahrer zuverlässig vor einem die Fahrsicherheit beeinträchtigenden Reifendruck gewarnt werden.

Bevorzugt wird die Sendetätigkeit spätestens dann aufgenommen, wenn das aktuelle Messsignal des Beschleunigungssensors einen zweiten vorgegebenen Schwellenwert übersteigt.

Ein z- bzw. tangential ausgerichteter Beschleunigungssensor misst bei einem parkenden Fahrzeug in Abhängigkeit von der Drehwinkelstellung des Fahrzeugrads einen Beschleunigungswert zwischen +1g und -1g, wobei g die Erdbeschleunigung ist. Bei drehendem Rad ergibt sich eine Sinuskurve zwischen +1g und -1g, der wegen der Zentrifugalkraft ein Wert überlagert ist, der proportional zur Drehfrequenz und somit der Fahrtgeschwindigkeit ansteigt. Vorteilhaft kann somit für den ersten Schwellenwert beispielsweise eine Änderung des gemessenen Beschleunigungswerts um 0,2g verwendet werden, also ein Absolutwert der Differenz zwischen einem aktuell gemessenen Beschleunigungssignal und einem zuvor bei parkendem Fahrzeug gemessenen Beschleunigungssignal. Als zweiter Schwellenwert kann beispielsweise ein absoluter Wert der Beschleunigung verwendet werden, der unabhängig von der Orientierung des Rades bei parkendem Fahrzeug praktisch nicht auftreten kann, z.B. 10g. Wenn der zweite vorgegebene Schwellenwert überschritten wurde, impliziert dies, dass sich die Räder relativ schnell drehen. Die notwendige Bedingung zur Differenz eines aktuellen Beschleunigungssignals und einem früheren Beschleunigungssignal ist dann ohnehin erfüllt.

Eine weitere vorteilhafte Weiterbildung der Erfindung sieht vor, dass eine Sendetätigkeit, die nach einer Feststellung, dass sich das aktuelle Messsignal des Beschleunigungssensors von dem früheren Messsignal des Beschleunigungssensors um mehr als einen vorgegebenen Schwellenwert unterscheidet, aufgenommen wurde, nach einer vorgegebenen Zeitspanne eingestellt wird, wenn innerhalb der vorgegebenen Zeitspanne nicht festgestellt wird, dass ein aktuelles Signal des Beschleunigungssensors den zweiten Schwellenwert übersteigt.

Der Beschleunigungssensor kann beispielsweise in Zeitabständen von 10 Sekunden oder weniger, bevorzugt in Zeitabständen von nicht mehr als 5 Sekunden abgefragt werden. Der Vergleich eines aktuellen Beschleunigungssignals kann erfindungsgemäß mit dem unmittelbar zuvor gemessenen Beschleunigungssignal erfolgen oder auch mit einem früher während der aktuellen Parkdauer gemessenen Beschleunigungssignal, beispielsweise dem vorletzten oder dem vorvorletzten Beschleunigungssignal. Auf diese Weise lässt sich eine sehr langsame Raddrehung bei Fahrtbeginn noch besser erkennen.

Eine erfindungsgemäße Reifendrucküberwachungseinheit kann in einem Parkmodus und in einem Fahrtmodus arbeiten. Im Fahrtmodus wird in vorgegebenen Zeitabständen der Reifendruck gemessen und gesendet. Beim Übergang aus dem Fahrtmodus in den Parkmodus wird der Sender deaktiviert und die Sendetätigkeit eingestellt bis ein Fahrtbeginn detektiert wird. Im Parkmodus wird dazu in vorgegebenen Zeitabständen mit dem Beschleunigungssensor die Beschleunigung gemessen und ein gemessenes Beschleunigungssignal mit einem früheren Beschleunigungssignal verglichen. Druckmessungen werden bevorzugt ebenfalls in regelmäßigen Zeitabständen durchgeführt. Möglich ist aber auch, dass Druckmessungen erst dann durchgeführt werden, wenn bei einem Vergleich eines aktuellen Beschleunigungssignals mit einem früheren Beschleunigungssignal festgestellt wird, dass eine Änderung um mehr als einen vorgegebenen Schwellenwert erfolgt ist, also ein Fahrtbeginn detektiert wurde.

Weitere Einzelheiten und Vorteile der Erfindung werden an einem Ausführungsbeispiel unter Bezugnahme auf die beigefügte Zeichnung erläutert. Es zeigt:

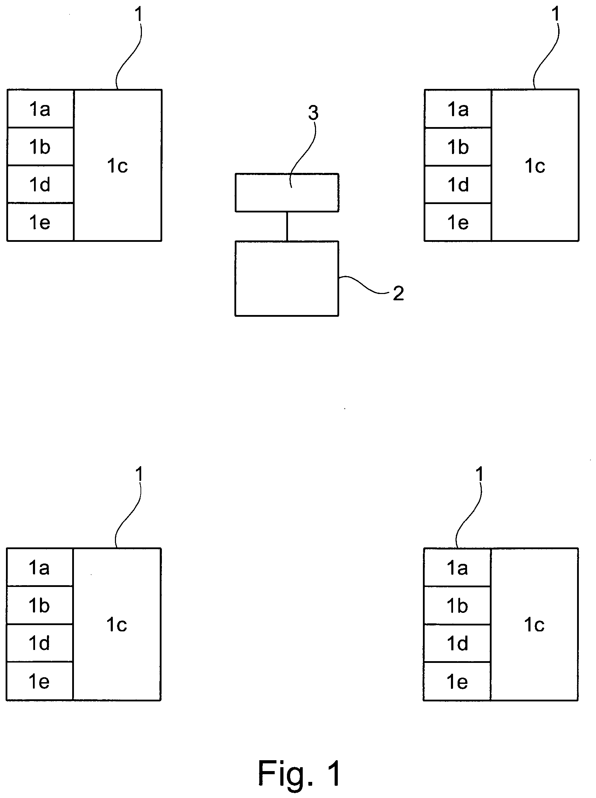

Fig. 1 eine schematische Darstellung eines Reifendrucküberwachungssystems eines Fahrzeugs.

Ein System zum Überwachen des Reifendrucks in Fahrzeugen umfasst mehrere Reifendrucküberwachungseinheiten 1, die jeweils in einem der Luftreifen eines Fahrzeugs angeordnet sind und einen Drucksensor 1a, einen Beschleunigungssensor 1b, eine Steuereinheit 1c, eine Stromquelle 1d, z.B. eine Batterie, und einen Sender 1e aufweisen. Zu dem System gehören außerdem eine ortsfest am Fahrzeug angeordnete Auswerteeinheit 2, um von den Reifendrucküberwachungseinheiten 1 gesendete Datentelegramme, die jeweils eine Druckinformation und eine charakteristische Kennung der sendenden Reifendrucküberwachungseinheiten enthalten, auszuwerten. An die Auswerteeinheit 2 ist ein Empfänger 3 angeschlossen.

Die Reifendrucküberwachungseinheiten 1 können in einem Parkmodus sowie in einem Fahrtmodus arbeiten. In dem Parkmodus wird nicht gesendet und der Sender 1e ist deaktiviert. Beim Übergang in den Fahrtmodus wird der Sender 1e aktiviert. In dem Fahrmodus werden in vorgegebenen Zeitabständen Druckinformationen drahtlos gesendet. Der Übergang von dem Parkmodus in den Fahrtmodus und umgekehrt erfolgt in Abhängigkeit von Signalen des Beschleunigungssensors 1b der jeweiligen Reifendrucküberwachungseinheit 1.

Während sich die Reifendrucküberwachungseinheit im Parkmodus befindet, wird in vorgegebenen Zeitabständen von z.B 10 Sekunden oder weniger der Beschleunigungssensor 1b abgefragt, also die Beschleunigung gemessen. Der gemessene Wert wird dann mit einem zuvor während der Parkdauer gemessenen Wert verglichen. Wenn sich der aktuelle Wert des Beschleunigungssignals um mehr als einen vorgegebenen Schwellenwert von dem früheren Wert unterscheidet, beispielsweise um mehr als 0,2 g, ist eine notwendige Bedingung für die Aufnahme einer Sendetätigkeit erfüllt.

Diese notwendige Bedingung kann hinreichend sein, so dass jedes Mal, wenn sie erfüllt ist Druckdaten gesendet werden. Bei dem hier beschriebenen Ausführungsbeispiel ist diese notwendige Bedingung aber mit einer weiteren Bedingung, nämlich einem Druckabfall verknüpft. Wenn sich die Reifendrucküberwachungseinheit im Parkmodus befindet, wird deshalb der Reifendruck in vorgegebenen ersten Zeitabständen gemessen, z. B. in Zeitabständen von 10 Sekunden bis 5 Minuten, insbesondere in Zeitabständen von 10 Sekunden bis 1 Minute. Der dabei gemessene Druck wird mit einem vorgegebenen Schwellenwert verglichen. Wenn der gemessene Druck einen vorgegebenen Schwellenwert unterschreitet und die vorstehend erwähnte notwendige Bedingung erfüllt ist, beginnt die Reifendrucküberwachungseinheit 1 Druckdaten zu senden, geht also in den Fahrtmodus über.

Wird kein Druckabfall festgestellt, wird die Sendetätigkeit erst aufgenommen, wenn Signale des Beschleunigungssensors 1b eine zweiten Schwellenwert überschreiten, z.B. einen Wert von 10g. Ein solcher Wert kann nur durch die während der Fahrt auftretende Zentrifugalbeschleunigung verursacht werden.

Im Fahrtmodus wird der Reifendruck in vorgegebenen ersten Zeitabständen gemessen, die kleiner als die Zeitabstände zwischen Druckmessungen im Parkmodus sein können, und dann in vorgegebenen zweiten Zeitabständen eine Druckinformation gesendet.

Aus dem Fahrtmodus gelangt die Reifendrucküberwachungseinheit in den Parkmodus, wenn der Beschleunigungssensor keine Fahrt mehr detektiert. Dafür können andere Detektionsschwellen verwendet werden als für den Übergang vom Parkmodus in den Fahrtmodus. Beispielsweise kann ein Übergang in den Parkmodus erfolgen, sobald während eines vorgegebenen Zeitraums von beispielsweise 1 bis 5 Minuten alle gemessenen Beschleunigungswerte nicht mehr als 0,3 g voneinander abweichen.

Wurde der Übergang in den Fahrmodus durch eine gemessene Änderung des Beschleunigungssignals nach einem problematischen Druckverlust ausgelöst, besteht die Möglichkeit, dass irrtümlich eine Fahrbewegung des Fahrzeugs angenommen wurde. Um in diesem Fall den Energieverbrauch zu minimieren, kann vorgesehen sein, dass die Steuereinheit 1c nach einer vorgegebenen Zeitspanne, z.B. 1 Minute bis 10 Minuten, oder einer vorgegebenen Anzahl von Sendungen (oder einer einzigen Sendung) eine Rückkehr in den Parkmodus veranlasst, wenn nicht innerhalb dieser Zeitspanne auch die erste Detektionsschwelle von Signalen des Beschleunigungssensors 1b überschritten wird.

Die Zeitabstände zwischen Sendungen im Fahrmodus können verkürzt werden, wenn ein kritischer Druckabfall festgestellt wird, z.B. wenn der Reifendruck einen vorgegebenen Schwellenwert unterschreitet oder der Reifendruck im Vergleich zu der zuvor vorgenommen Messung um mehr als einen kritischen Wert abgenommen hat.

Im Fahrmodus kann eine automatische Zuordnung von charakteristischen Kennungen der einzelnen Reifendrucküberwachungseinheiten zu den jeweiligen Radpositionen des Fahrzeugs erfolgen, wie dies beispielsweise in DE 10 2015 122 820 B3 beschrieben ist. Mit einer solchen automatischen Zuordnung und der Aussendung von entsprechenden Datentelegrammen wird bei dem beschriebenen Ausführungsbeispiel erst begonnen, wenn das aktuelle Messsignal des Beschleunigungssensors den zweiten vorgegebenen Schwellenwert, z.B. 10g, überschreitet. Frühere Sendetätigkeit nach Fahrtbeginn kann auf verkürzte Datentelegramme beschränkt sein, die zwar Druckdaten enthalten, aber keine automatische Zuordnung von Reifendrucküberwachungseinheiten zu Radpositionen ermöglichen.

### Bezugszeichenliste

- 1a: Drucksensor
- 1b: Beschleunigungssensor
- 1c: Steuereinheit
- 1d: Stromquelle
- 1e: Sender
- 2: Auswerteeinheit
- 3: Empfänger

## Patentansprüche

1. Verfahren zum Überwachen des Reifendrucks eines Fahrzeugrades, wobei bei fahrendem Fahrzeug der Reifendruck gemessen und Druckdaten gesendet werden, und
bei parkendem Fahrzeug die Sendetätigkeit eingestellt ist,
wobei durch Auswertung von Signalen eines Beschleunigungssensors (1b) erkannt wird, ob das Fahrzeug parkt oder fährt,
bei parkendem Fahrzeug in vorgegebenen Zeitabständen ein aktuelles Messsignal des Beschleunigungssensors (1b) mit einem früheren Messsignal des Beschleunigungssensors (1b) verglichen wird und eine notwendige Bedingung für das Aussenden von Druckdaten darin besteht, dass sich das aktuelle Messsignal des Beschleunigungssensors (1b) von dem früheren Messsignal des Beschleunigungssensors (1b) um mehr als einen vorgegebenen Schwellenwert unterscheidet, **dadurch gekennzeichnet, dass** eine hinreichende Bedingung für das Aussenden von Druckdaten darin besteht, dass die notwendige Bedingung erfüllt ist und zusätzlich ein Abfall des Reifendrucks unter einen vorgegebenen Schwellenwert detektiert wurde.

2. Verfahren nach Anspruch 1, **dadurch gekennzeichnet, dass** eine hinreichende Bedingung für das Aussenden von Druckdaten darin besteht, dass die notwendige Bedingung erfüllt ist und zusätzlich das aktuelle Messsignal des Beschleunigungssensors (1b) einen zweiten vorgegebenen Schwellenwert überschreitet.

3. Verfahren nach einem der vorstehenden Ansprüche, **dadurch gekennzeichnet, dass** eine Sendetätigkeit, die nach einer Feststellung, dass sich das aktuelle Messsignal des Beschleunigungssensors (1b) von dem früheren Messsignal des Beschleunigungssensors (1b) um mehr als einen vorgegebenen Schwellenwert unterscheidet, aufgenommen wurde nach einer vorgegebenen Zeitspanne eingestellt wird, wenn innerhalb der vorgegebenen Zeitspanne nicht festgestellt wird, dass ein aktuelles Signal des Beschleunigungssensors (1b) den zweiten Schwellenwert übersteigt.

4. Reifendrucküberwachungseinheit mit
einem Drucksensor (1a) zum Messen des Reifendrucks,
einem Beschleunigungssensor (1b),
einem Sender (1e) zum drahtlosen Aussenden von Informationen über den Reifendruck, und
einer Steuereinheit (1c), die an den Drucksensor (1a), den Beschleunigungssensor (1b) und den Sender (1e) angeschlossen ist,
wobei die Reifendrucküberwachungseinheit in Abhängigkeit von Messsignalen des Beschleunigungssensors (1b) zwischen einem Parkmodus und einem Fahrtmodus wechselt,
in dem Fahrtmodus der Reifendruck gemessen und über den Sender (1e) Reifendruckdaten gesendet werden,
beim Übergang in den Parkmodus der Sender (1e) deaktiviert und die Sendetätigkeit eingestellt wird,
wobei in dem Parkmodus in vorgegebenen Zeitabständen ein aktuelles Messsignal des Beschleunigungssensors (1b) mit einem früheren Messsignal des Beschleunigungssensors (1b) verglichen wird und eine notwendige Bedingung für das Aussenden von Druckdaten darin besteht, dass sich das aktuelle Messsignal des Beschleunigungssensors (1b) von dem früheren Messsignal des Beschleunigungssensors (1b) um mehr als einen vorgegebenen Schwellenwert unterscheidet,
**dadurch gekennzeichnet, dass** eine hinreichende Bedingung für das Aussenden von Druckdaten darin besteht, dass die notwendige Bedingung erfüllt ist und zusätzlich ein Abfall des Reifendrucks unter einen vorgegebenen Schwellenwert detektiert wurde.

5. Reifendrucküberwachungseinheit nach Anspruch 4, **dadurch gekennzeichnet, dass** in dem Fahrtmodus das Aussenden von Reifendruckdaten in vorgegebenen Zeitabständen veranlasst wird.

6. Reifendrucküberwachungseinheit nach Anspruch 5, **dadurch gekennzeichnet, dass** in dem Fahrtmodus das Aussenden von Reifendruckdaten zusätzlich durch einen kritischen Druckabfall veranlasst wird.

7. Reifendrucküberwachungseinheit nach einem der Ansprüche 4 bis 6, **dadurch gekennzeichnet, dass** in dem Parkmodus der Reifendruck in Zeitabständen von nicht mehr als 1 Minute, vorzugsweise nicht mehr als 30 Sekunden gemessen wird.

## Claims

1. Method for monitoring tyre pressure of a vehicle wheel, wherein the tyre pressure is measured and pressure data is transmitted when the vehicle is moving, and Transmission activity is stopped when the vehicle is parked,
whereby by analysing signals of an acceleration sensor (1b) it is determined whether the vehicle is parked or moving,
when the vehicle is parked, a current measurement signal of the acceleration sensor (1b) is compared at predetermined time intervals with an earlier measurement signal of the acceleration sensor (1b) and a necessary condition for the transmission of pressure data is that the current measurement signal of the acceleration sensor (1b) differs from the earlier measurement signal of the acceleration sensor (1b) by more than a predetermined threshold value, **characterised in that** a sufficient condition for the transmission of pressure data is that the necessary condition is fulfilled and, in addition, a drop in the tyre pressure below a predetermined threshold value has been detected.

2. Method according to claim 1, **characterised in that** a sufficient condition for the transmission of pressure data is that the necessary condition is fulfilled and, in addition, the current measurement signal of the acceleration sensor (1b) exceeds a second predetermined threshold value.

3. Method according to any one of the preceding claims, **characterised in that** a transmission activity, which was started after a determination that the current measurement signal of the acceleration sensor (1b) differs from the previous measurement signal of the acceleration sensor (1b) by more than a predetermined threshold value, is stopped after a predetermined period of time if it is not deter-mined within the predetermined period of time that a current signal of the acceleration sensor (1b) exceeds the second threshold value.

4. Tyre pressure monitoring unit comprising
a pressure sensor (1a) for measuring tyre pressure,
an acceleration sensor (1b),
a transmitter (1e) for wirelessly transmitting information about the tyre pressure, and
a control unit (1c), which is connected to the pressure sensor (1a), the acceleration sensor (1b) and the transmitter (1e),
wherein the tyre pressure monitoring unit switches between a parking mode and a driving mode depending on measurement signals from the acceleration sensor (1b),
the tyre pressure is measured in the driving mode and tyre pressure data is sent via the transmitter (1e),
the transmitter (1e) is deactivated when switching to parking mode and transmission is stopped,
wherein, in the parking mode, a current measurement signal of the acceleration sensor (1b) is compared at predetermined time intervals with an earlier measurement signal of the acceleration sensor (1b) and a necessary condition for the transmission of pressure data is that the current measurement signal of the acceleration sensor (1b) differs from the earlier measurement signal of the acceleration sensor (1b) by more than a predetermined threshold value,
**characterised in that** a sufficient condition for the transmission of pressure data is that the necessary condition is fulfilled and, in addition, a drop in tyre pressure below a predetermined threshold value has been detected.

5. Tyre pressure monitoring unit according to claim 4, **characterised in that** in the driving mode the transmission of tyre pressure data is initiated at predetermined time intervals.

6. Tyre pressure monitoring unit according to claim 5, **characterised in that** in the driving mode the transmission of tyre pressure data is additionally triggered by a critical pressure drop.

7. Tyre pressure monitoring unit according to any one of claims 4 to 6, **characterised in that** in the parking mode the tyre pressure is measured at intervals of not more than 1 minute, preferably not more than 30 seconds.

## Revendications

1. Procédé de surveillance de pression de pneu d'une roue de véhicule, dans lequel la pression de pneu est mesurée et les données de pression sont transmises lorsque le véhicule est en mouvement, et
l'activité de transmission est arrêtée lorsque le véhicule est en stationnement, les signaux provenant d'un capteur d'accélération (1b) sont analysés pour déterminer si le véhicule est en stationnement ou en mouvement,
lorsque le véhicule est en stationnement, un signal de mesure actuel du capteur d'accélération (1b) est comparé à des intervalles de temps prédéterminés avec un signal de mesure antérieur du capteur d'accélération (1b) et une condition nécessaire pour la transmission des données de pression consiste en ce que le signal de mesure actuel du capteur d'accélération (1b) diffère du signal de mesure antérieur du capteur d'accélération (1b) de plus d'une valeur seuil prédéterminée, **caractérisé en ce qu'**une condition suffisante pour la transmission des données de pression est que la condition nécessaire est remplie et, en outre, qu'une chute de la pression de pneu en dessous d'une valeur seuil prédéterminée a été détectée.

2. Procédé selon la revendication 1, **caractérisé par le fait qu'**une condition suffisante pour la transmission des données de pression est que la condition nécessaire est remplie et, en outre, que le signal de mesure actuel du capteur d'accélération (1b) dépasse une seconde valeur seuil prédéterminée.

3. Procédé selon l'une des revendications précédentes, **caractérisé par le fait qu'**une activité de transmission, qui a commencé après avoir déterminé que le signal de mesure actuel du capteur d'accélération (1b) diffère du signal de mesure antérieur du capteur d'accélération (1b) de plus d'une valeur seuil prédéterminée, est interrompue après une période de temps prédéterminée s'il n'est pas déterminé dans la période de temps prédéterminée qu'un signal actuel du capteur d'accélération (1b) dépasse la seconde valeur seuil.

4. Unité de surveillance de pression de pneu comprenant
un capteur de pression (1a) pour mesurer la pression de pneu,
un capteur d'accélération (1b),
un émetteur (1e) pour transmettre sans fil des informations sur la pression de pneu, et
une unité de commande (1c), qui est connectée au capteur de pression (1a), au capteur d'accélération (1b) et à l'émetteur (1e),
l'unité de surveillance de pression de pneu passe d'un mode de stationnement à un mode de conduite en fonction des signaux de mesure du capteur d'accélération (1b),
la pression de pneu est mesurée en mode de conduite et les données de pression de pneu sont transmises par l'intermédiaire de l'émetteur (1e),
lorsque l'on passe en mode de conduite, l'émetteur (1e) est désactivé et l'activité de transmission est arrêtée,
dans lequel, en mode de stationnement, un signal de mesure actuel du capteur d'accélération (1b) est comparé à des intervalles de temps prédéterminés avec un signal de mesure antérieur du capteur d'accélération (1b) et une condition nécessaire pour la transmission des données de pression est que le signal de mesure actuel du capteur d'accélération (1b) diffère du signal de mesure antérieur du capteur d'accélération (1 b) de plus d'une valeur seuil prédéterminée, **caractérisé par le fait qu'**une condition suffisante pour la transmission des données de pression est que la condition nécessaire est remplie et, en outre, qu'une chute de la pression de pneu en dessous d'une valeur seuil prédéterminée a été détectée.

5. Unité de surveillance de pression de pneu selon la revendication 4, **caractérisée par le fait qu'**en mode de conduite, la transmission des données de pression de pneu est déclenchée à des intervalles de temps prédéterminés.

6. Unité de surveillance de pression de pneu selon la revendication 5, **caractérisée par le fait qu'**en mode de conduite, la transmission des données de pression des pneus est également déclenchée par une chute de pression critique.

7. Unité de surveillance de pression de pneu selon l'une des revendications 4 à 6, **caractérisée par le fait qu'**en mode de stationnement, la pression de pneu est mesurée à des intervalles de temps ne dépassant pas 1 minute, de préférence ne dépassant pas 30 secondes.
